# EUROPEAN PATENT SPECIFICATION

(11) **EP 2 339 692 B1**
(45) Date of publication and mention of the grant of the patent: **14.11.2012**
(21) Application number: 10194979.0
(22) Date of filing: 14.12.2010
(51) Int. Cl.: H01Q 1/22, B60C 23/04, G06K 7/10, G07C 5/00

(54) **Antenna assembly for a tag reader and method of reading transmission data**
Antennenanordnung für einen Etikettenleser und Verfahren zum Lesen von Übertragungsdaten
Ensemble d'antenne pour lecteur d'étiquettes et procédé de lecture de données de transmission

(30) Priority: 17.12.2009 US 640024; 17.12.2009 US 640028
(43) Date of publication of application: 29.06.2011
(73) Proprietor: The Goodyear Tire & Rubber Company, Akron, OH 44316-0001 (US)
(72) Inventor: Benedict, Robert Leon, Tallmadge, OH 44278 (US); Lettieri, Joseph Carmine, Hudson, OH 44236 (US); Fenkanyn, John Michael, Akron, OH 44312 (US); Orosa, Mario Vincent, North Canton, OH 44720 (US); Crano, Richard Nicholas, Akron, OH 44321 (US); Batcho, Sr., Joseph, Paul, Warren, OH 44481 (US)
(74) Representative: Kutsch, Bernd

(56) References cited:
- WO-A2-2005/036694

## Description

### Field of the Invention

The invention relates generally to RFID device readers and, more specifically, to an antenna assembly for a reader of RFID devices mounted to the wheel units of a vehicle, as well as to a method of reading tire mounted RFID devices within a read station.

### Background of the Invention

Radio frequency identification devices (RFID devices) are useful in association with sundry product categories and have gained widespread commercial importance and acceptance. Such devices generally have memory storage capability for electronically storing product-specific information such as product history and a product identification number. The device further provides an integrated transmitter that transmits responsive to a prompt signal the stored data for receipt by a receiver antenna. For example, it is known to associate an RFID with a vehicle tire or wheel rim assembly in order to access tire, vehicle, and/or wheel related identification and history throughout the lifetime service of the product.

It is important in any RFID transmission system that the data transmitted by the product-based RFID device be transmitted reliably, expeditiously, and without error to a reader for processing and use. Without a reliable data transmission and reception capability, the integrity of the information downloaded and the utility of the system will be compromised. In a vehicle tire or wheel-based application, the construction of a reliable RFID data transmission system presents numerous application-specific challenges that must be addressed in order to achieve an acceptable level of performance.

WO-A- 2005/036694 describes an antenna assembly in accordance with the preamble of claim 1.

### Summary of the Invention

The invention relates to an antenna assembly in accordance with claim 1 and to a method in accordance with claim 14.

Dependent claims refer to preferred embodiments of the invention.

### Brief Description of the Drawings

The invention will be described by way of example and with reference to the accompanying drawings in which:
FIG. 1A is a schematic representation of an antenna and the field generated therefrom with a transmitting device approaching the antenna;
FIG. 1B is a schematic representation of the antenna of FIG. 1A tilted toward the approaching transmitting device.
FIG. 2 is a top perspective view of an antenna assembly configured pursuant to the invention.
FIG. 3 is an exploded bottom perspective view of the antenna assembly of FIG. 2.
FIG. 4A is a schematic representation of a vehicle tire initial travel over the antenna assembly.
FIG. 4B is a schematic representation of a the vehicle tire traveling over a rearward surface portion of the antenna assembly.
FIG. 5 is a schematic representation of a read station in which four antenna assemblies are positioned to intercept four vehicle tires and transmit downloaded data from the transmitting devices in the tires to a remote data processing computer.
FIG. 6 is a top perspective view of a center unit of an alternative embodiment of an antenna assembly configured pursuant to the invention.
FIG. 7 is a partially exploded bottom perspective view of the center unit.
FIG. 8 is a bottom partially exploded view of the three unit alternative antenna assembly embodiment.
FIG. 9 is a schematic representation of a read station in which four three-component antenna assemblies are positioned to intercept truck tires and transmit downloaded data from the transmitting devices in the tires to a remote data processing computer.

### Detailed Description of the Invention

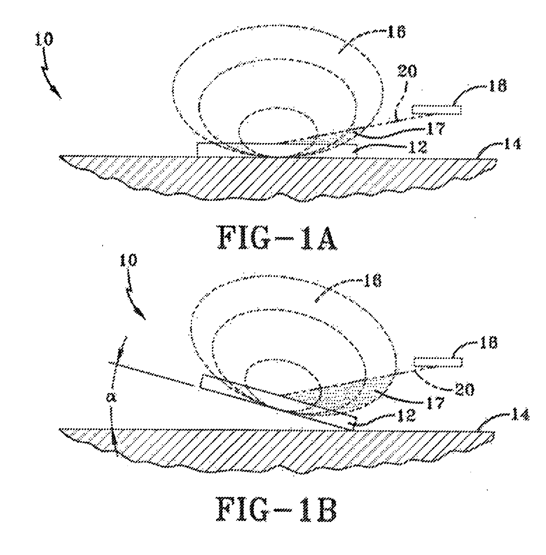

Referring to FIGS. 1A and 1B, a schematic of an antenna system 10 is shown including an antenna 12 positioned flat on a ground surface 14. The antenna 12 generates a field or beam pattern 16 for the purpose of receiving data transmission signals 20 from an approaching electronic device 18. Device 18 is of a type commercially available and used, such as a radio frequency identification (RFID) tag. The tag 18 may be mounted to a product that moves toward and away from a read station in which the antenna 12 and its generated beam pattern 16 is situated. The speed at which the tag 18 approaches and leaves the vicinity of the antenna 12 will affect the time interval in which the transmitted data 20 is received by the antenna field 16. The read range of the antenna 12 is increased and represented by the shaded region 17 of the field 16. A maximized read range will positively affect the coupling efficiency between the transmitted signal 20 and the antenna field 16 and serve to promote a complete and accurate data transmission as the tag approaches and leaves the vicinity of the antenna 12.

FIG. 1B shows an alternative antenna position within a read station in which the antenna 12 is tilted toward the approach path of the tag 18. Tilting of the antenna 12 at an acute angle α with respect to the ground surface 14 will cause the beam pattern 16 to tilt at angle α toward the approach path (represented by data transmission 20) of the tag 18. The tilting of the field 16 toward the approach path of the tag 18 serves to enlarge the read field 17 as shown by the larger shaded region of FIG. 1B as compared with the shaded region of FIG. 1A. The read range of the antenna 12 is thus maximized by introducing a mechanical tilt at angle α. The enlargement of the read range 17 effected by mechanically tilting the antenna 12 improves the reliability of the system and ensures that transmitted data will be captured as the tag 18 moves through the read zone. With the mechanical tilt, more of the cross-sectional area of the antenna pattern 16 is available and improved transmission efficiency is gained.

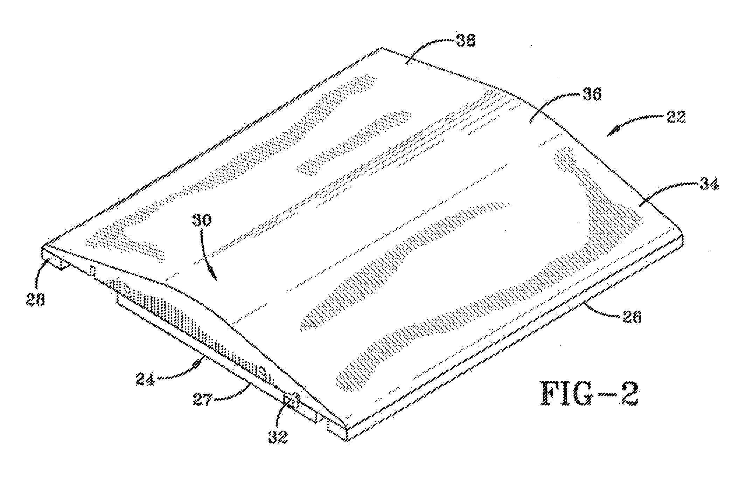

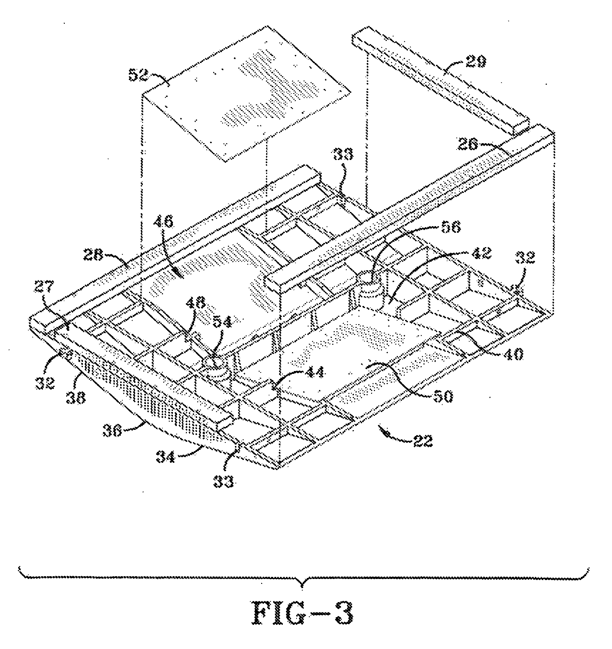

With reference to FIGS. 2 and 3, a tilted antenna system stand 22 is shown to include a stand freestanding base 24 supported by elongate support legs 26, 27, 28, and 29. The support legs affix to an underside of the base 24 along outer peripheral locations and for support of the base on a ground surface. The stand 22 is provided with a cover 30 having a convex profile that covers the top of the base 24. As used herein, "convex" is meant in a general sense. The cover upper convex surface may be composed of adjoining flat surface segments or be continuously radiussed as shown. The base is formed of any suitably strong material such as plastic, and is configured having a protruding latch finger 32 and latch slot 33 spaced apart along each side of the stand. The finger 32 is shaped to interlock with the slot 33 of a like-configured unit to thereby chain multiple stands together in a series. The stand cover 30 is of convex sectional configuration, formed to include a forward inclined surface 34 extending to an apex or crown 36, and a rearward inclined surface 38 extending from the crown 36 to a rearward side of the stand. A matrix of cross-ribs 40 may be molded into the underside of the base 24 for adding strength to the structure.

The cross-ribs 40 define a forward antenna receiving recess 42 with support notches 44 formed in ribs along the sides of the recess 42. A similarly configured rearward antenna receiving recess 46 is positioned between the cross-ribs 40 of the rearward portion of the base, likewise providing support notches 48 formed in ribs along the sides of the rearward recess 46. A forward antenna 50 is sized to fit within the forward recess 42, resting upon notches 44. A rearward antenna 52 is positioned within rearward recess 46 and rests upon the notches 48. The notches 44, 48 formed within the cross-ribs 40 form an angled seat within the recesses 42, 46 such that the antennae 50, 52 when positioned within the recesses are at an acute angle with respect to a vertical centerline of the stand 22. The antennae 50, 52 angle in opposite directions from the centerline at an acute angle α (see FIG. 1B) which is preferably between 13 to 15 degrees, although angles of different magnitudes may be used respectively for the two antenna in order to create the antenna field desired.

It will be appreciated that the cover 30 is formed of RF transparent material and serves to enclose the antennae 50, 52 in their angled position within the stand. Assembly posts 54, 56 mate within sockets formed in the cover to attach the cover to the ground surface 14 in FIGS 1A and 1B. The antennae 50, 52 are angled within the base 24 at the aforementioned acute angle which may be the same for each antenna or different, depending on the system objectives and requirements. In the assembled condition, the antennae 50, 52 generally reside beneath the inclined RF transparent surfaces 34, 36, respectively. The angle of inclination of the antennae 50, 52 and the surface portions 34, 36 may be the same or differ. The stand assembly 22, it will be appreciated, produces a speed bump when the stand is positioned to intercept the wheels of an oncoming vehicle. The tires of the vehicle are intended to ride up the forward surface 34, over the crest or apex 38, and down the rearward inclined surface 38. The slopes of inclined surfaces 34, 38 are designed to create a bump of desired severity so that a vehicle traveling over the stand 22 will be slowed to an objective read speed. Thus, the slope of the inclined surfaces 34, 36 may be more or less than the slope of the inclined antennae 50, 52 within the stand, depending on the degree of bump necessary to slow the oncoming vehicle to an objective read speed.

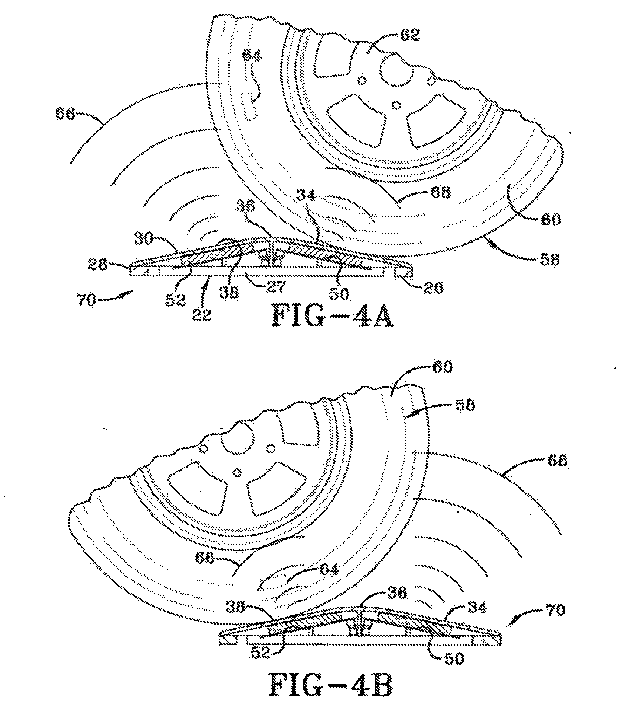

FIGS. 4A and 4B illustrate the operation of the speed bump created by the stand 22 and the tilted antenna 50, 52 positioned within the stand as a vehicle tire 58 rides up, over, and down the stand surfaces 34, 36, 38. The tire 58 includes a sidewall 60 and mounts to a rim 62 in standard fashion. An RFID tag 64 is secured to the tire 58 by conventional means at a conventional location such as to the tire inner liner (not shown) defining the tire cavity. So positioned, the tag 64 rotates with the tire 58 at the same speed of rotation. An antenna beam pattern 68 from the forward antenna 50 is tilted toward the tire 58 approach path as the tire engages and rolls up the inclined surface 34 of the stand 22. The tilt of the antenna 50 within the stand 22 tilts the field 66 so as to allow the signal from the tag 64 access to more of the field cross-section as tag 64 rotates with the tire. The second, rearwardly mounted antenna 52 is likewise tilted within the stand in the opposite (rearward facing) direction from the forward (forward facing) tilted antenna 50. The field or beam pattern 66 is thus tilted to the rear by the generally same angle α as the forward beam pattern 68 from antenna 50 tilts forward. It is preferred, although not necessary, that the acute tilt angle α be within the range of 13 to 15 degrees or 9 to 19 degrees.

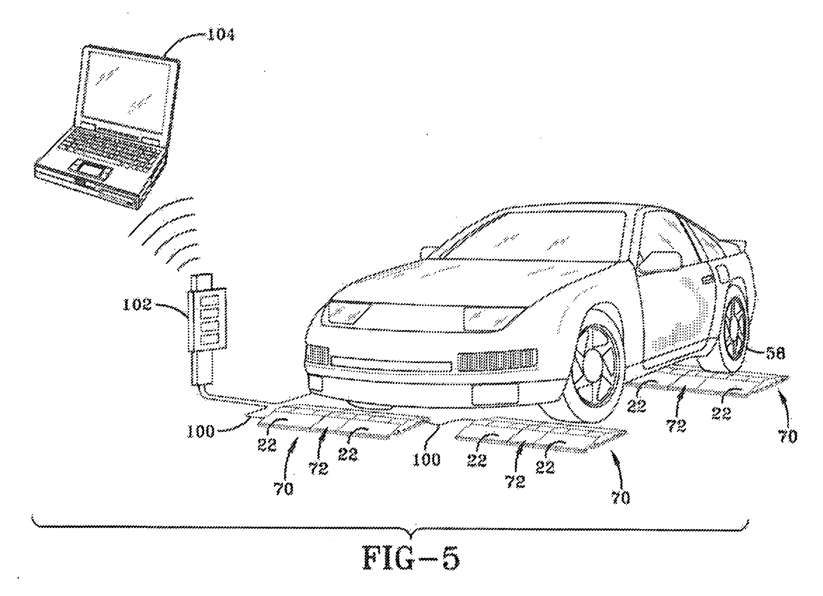

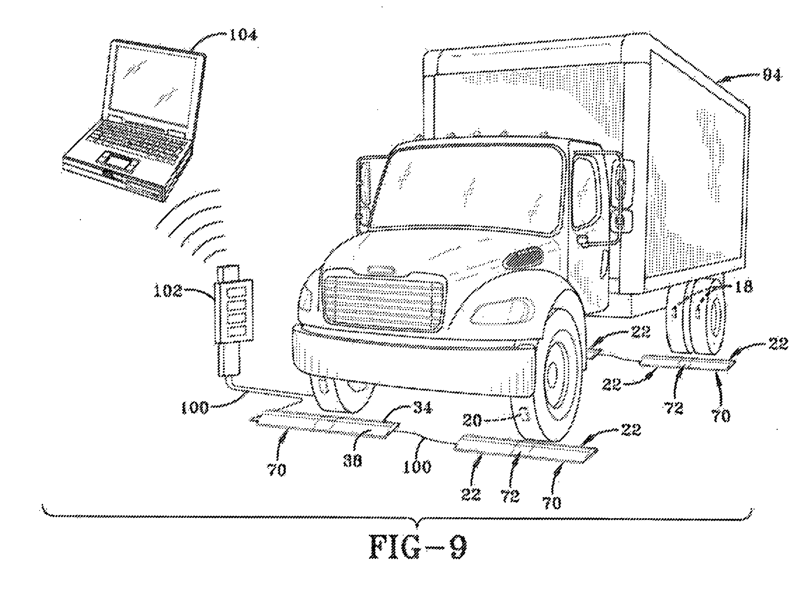

The position of the antenna 50 relative to the antenna 52 is close enough such that the beam patterns 66, 68 overlap to a minimal extent and cover without a gap the area above the stand 22. Thus, the tag 64, mounted to the tire 58, will rotate over the surfaces 34, 36, 38 with the tire and complete a revolution with the tire 58 within the time interval required for the tire to move over a stand and/or multiple antenna component assemblies 70 as shown in FIGS 5 and 9. As the tag rotates, data transmission by the tag will intersect the beam patterns 66, 68 of one or both of the antenna 50, 52. A reliable and complete transmission of data is thereby assured.

Moreover, the speed at which the tag 64 rotates with the tire 58 may be controlled by controlling the front to rear span and/or degree and/or extent of incline of the speed bump represented by surfaces 34, 36, and 38 of the stand 22. A higher angle of tilt of the forward and rearward surface or lengthening the surfaces 34, 36, and/or 38 raises the "bump" and will generally obligate the driver of the vehicle to slow down to a greater extent. This, in turn, slows the rotational speed of the tire and tag 64 over the stand 22 and elongates the time period (read interval) during which the tag transmission may be communicated to the antenna patterns 66, 68. Conversely, lowering the "bump" by adjusting the angle of tilt and/or width of stand surfaces 34, 36, and 38 will obligate a driver to slow the vehicle to a lesser extent. The read interval between the tag 64 and the beam patterns 66, 68 will be reduced accordingly. By adjusting the size (span) and/or tilt of the stand surfaces with the tilt of the antenna beam patterns, an optimal read interval may be attained that is long enough to effect a highly reliable data transmission without slowing the vehicle unnecessarily.

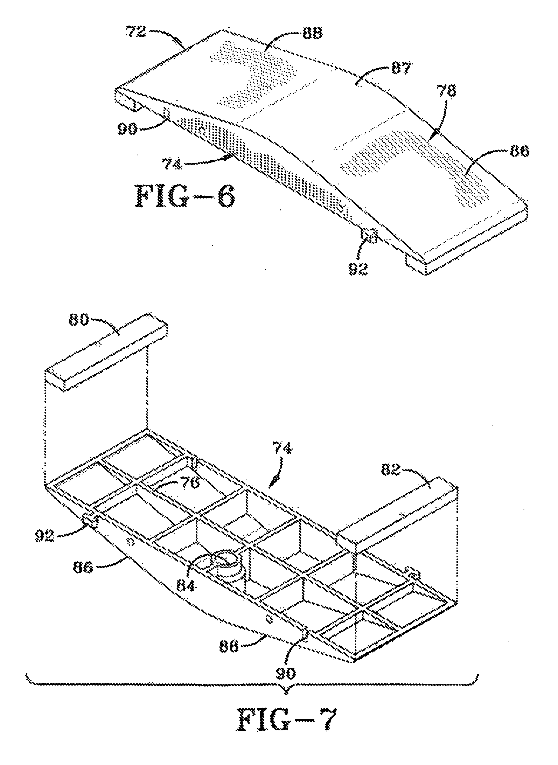

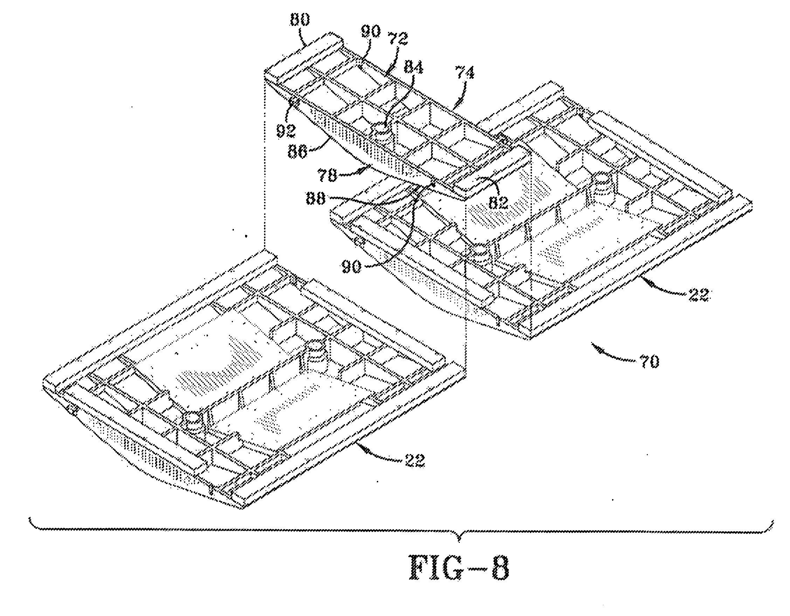

The tag 64 may be mounted to the inner liner of the sidewall of the tire 58 as explained. For such a mounting location, it may be beneficial to mount the antenna 50, 52 to a side of the tire 58 for improved coupling between the antenna beam pattern and the data transmission from the tag. To facilitate mounting the antenna to a side of a tire traveling over the stand, a bridging unit 72 may be utilized in a three-component stand assembly 70 such as that shown in FIGS. 6, 7, and 8. The tire is intended to ride directly over the bridging unit upper convex surface. The bridging unit 72 is situated between two antenna assemblies of the type described previously. The center or bridging unit 72 includes a body 74 having cross-rib reinforcement 76 and a convex upper surface 78. A pair of elongate support legs 80, 82 affix to an underside of the body 74 and support the body on a ground surface. A socket 84 connects the body 74 to the ground surface 14 in FIGS. 1A and 1B. The cover provides the arched or convex outer surface 78 and includes a forward inclined surface 86 and a rearward inclined surface 88, separated by an apex region 87. The forward and rearward surfaces 86, 88 have an acute tilt angle generally the same as the forward and rearward surfaces of the cover 30 (FIGS. 2 and 3) described previously. The bridging unit body 74 is formed to provide a latch finger 92 and a latch slot 90 along each longitudinal side that mate and interconnect with the latch 32 and latch slot 33 of the base 24. Accordingly, a three component series may be interconnected consisting of two antenna stands 22 on opposite side of a single bridging stand unit 72 as shown in FIG. 8. The center or bridging unit surfaces 86, 88 are targeted by a vehicle operator and tire 58 rides up and over the center unit during a drive-through read operation.

The incline of the surfaces 86, 88 complement the incline of surfaces 34, 38 of the antenna assembly 22. In the three component version of the invention, the two antenna assemblies 22 on opposite sides of the center unit 72 are to the side of the tire 58 and function to ensure that a complete and accurate data transmission between the tag 64 and the antenna 50, 52 will occur. The tilt of the antenna 50, 52 within each of the antenna assemblies 22 on opposite sides of the center unit 72 is generally the same, and it is preferred that the tilt angle be generally 13-15 degrees although more or less tilt may be employed if desired.

With reference to FIGS 4A and 4B, the tag 64 rotates with the tire 58. It is desirable to slow the vehicle by means of the speed bump formed one or two antenna stand assemblies 22 and, if desired, bridging unit 72. A single antenna stand assembly may be employed if it is preferred that the tire ride directly over the convex surface of RFID transparent cover 30. If an adjacent position of the antenna 50 and/or 52 is desired, stand assembly 22 may be used with a bridging unit 72. The tire rides over the bridging unit 72 in such a configuration with the antenna members 50, 52 positioned to the side. It is preferable that the speed bump configuration slow the rotational rate of the vehicle tire 58 to a targeted reduced rotational read rate optimal for effecting reliable data transmission as the tire passes over the convex upper surface. The size, shape and height of the bump will be selected to induce the vehicle operator to lower the speed of the vehicle to achieve the targeted reduced rotational read rate speed. The span and degree of incline created by surfaces 34, 36, 38 or, surface 86, 87, and 88 if a bridging unit 72 is employed, is constructed to operatively require the tire and the transmitting device 64 to at least complete one revolution over a stand and/or multiple antenna component assemblies 70 as shown in FIGS. 5 and 9 at the targeted reduced rotational read rate speed as the tire traverses over the bump. The fields 66, 68 are established above the tire path across the path in such a manner so as to continuously maintain the tag within one or the other or both of the fields 66, 68 as the tire rotates at the reduced read rate speed across the bump. In so doing, data transmission between the tag and the antenna fields is continuous and highly reliable and accurate transmission of data is facilitated.

FIGS. 5 and 9 illustrate the deployment of a three-component antenna assembly system into a read station for a passenger car (FIG. 5) station and for a cargo truck drive-through station (FIG. 9). In FIG. 5, four three-component assemblies 70 are positioned to intercept the four tires on a passenger car and form a drive-through read station. The car is driven through the station and the vehicle tires encounter the four stand assemblies generally simultaneously. The driver steers the tires toward and over the center unit 72 of each three-component stand and, upon encountering the four "bumps", slows the vehicle to an optimal read speed. As the tires travel over the center units 72, respectively, the two antenna assembly units 22 on opposite sides of each center unit engage the tag on each tire and data transmission from the tag to the antenna within each unit 22 is established and completed. At the reduced vehicle speed caused by the speed bumps, the optimal time interval required to effect complete data transmission is achieved. Data downloaded to the antenna may then be conducted by wiring 100 to a transmitting device 102 for wireless data transmission to a processing computer 104.

In FIG. 9, four three-component assemblies 70 are positioned to intercept the tires on a cargo truck and form a drive-through read station. The truck 94 may have a pair of forward tires and dual tandem tires in the rear as shown. The truck 94 is driven through the station and the vehicle tires encounter the four stand assemblies 70 generally simultaneously. The driver steers the tires toward and over the center unit 72 of each three-component stand 70 and, upon encountering the four "bumps", slows the vehicle to an optimal reduced read speed. As the tires travel over the center units 72, respectively, the two antenna assembly units 22 on opposite sides of each center unit engage the tag of each tire and data transmission from the tag to the antenna within each unit 22 is established and completed. At the reduced vehicle speed caused by the speed bumps, the optimal time interval required to effect complete data transmission is achieved. The tandem tires in the rear of the truck 94 may be read simultaneously as the tires pass over the center bridging unit 72 by the two assemblies 22 positioned to the side of the unit 72. Data downloaded to the antenna may then be conducted by wiring 100 to a transmitting device 102 for wireless data transmission to a processing computer 104.

With reference to FIGS. 4A and 4B and 9, as described previously, the bumps created by the assemblies 70 are configured to slow the vehicle to a lower speed that will allow the tags 64 in FIGS. 4A and 4B and tags 18 and 20 in FIG. 9 to rotate at least one complete revolution as the tire carrying the tag passes over a stand and/or multiple antenna component assemblies 70 as shown in FIGS. 5 and 9 through the fields created by antenna 50, 52. The fields created by antenna 50, 52 are positioned to keep read contact with the tag throughout its revolution over the speed bump to insure a reliable and accurate data transmission. The tilt of the antenna 50 orients its field pattern toward the tire as the tire engages and rides up onto the assembly 70 and the tilt of antenna 52 orients its field pattern toward the tire as the tire travels down a rearward surface portion of the assembly 70 and exits.

With reference to FIGS. 4A and 4B and 9, as described previously, the bumps created by the assemblies 70 are configured to slow the vehicle to a lower speed that will allow the tags 64 in FIGS. 4A and 4B and tags 18 and 20 in FIG. 9 to rotate at least one complete revolution as the tire carrying the tag passes over a stand and/or multiple antenna component assemblies 70 as shown in FIGS. 5 and 9 through the fields created by antenna 50, 52. The fields created by antenna 50, 52 are positioned to keep read contact with the tag throughout its revolution over the speed bump to insure a reliable and accurate data transmission. The tilt of the antenna 50 orients its field pattern toward the tire as the tire engages and rides up onto the assembly 70 and the tilt of antenna 52 orients its field pattern toward the tire as the tire travels down a rearward surface portion of the assembly 70 and exits.

## Claims

1. An antenna assembly for receiving a data transmission from an electronic transmitting device (18) mounted to a vehicle (94), the vehicle (94) having at least one tire assembly including a tire (58) the electronic transmitting device (18) being mounted to the vehicle tire assembly, the antenna assembly (10) comprising:
a stand (22) having a convex upper surface (30) operative to intercept and
engage the tire (58) as the tire (58) passes over the stand (22); and
at least one first antenna (50) proximally mounted with respect to the stand (22), the at least one first antenna (50) having a directionally aimed first antenna field (68) operative to receive the data transmission from the electronic transmitting device (18) as the tire (58) passes over the convex upper surface (30);
**characterized in that** the antenna assembly comprises at least one second antenna (52) proximally mounted with respect to the stand (22), the at least one second antenna (52) having a directionally aimed second antenna field (66) operative to receive the data transmission from the electronic transmitting device (18) as the tire (58) passes over the convex upper surface (30), wherein the directionally aimed first antenna field (68) is tilted at an acute tilt angle (α) toward an approach path of the tire (58) onto the convex upper surface (30) and the directionally aimed second antenna field (66) is tilted at an acute tilt angle (α) toward an exit path of the tire (58) along a trailing portion of the convex upper surface (30).

2. The antenna assembly of claim 1 wherein the stand (22) is designed to operatively slow down the rotational rate of the tire (58) to a targeted reduced rotational read rate or to a targeted reduced rotational read rate range as the tire (58) passes over the convex upper surface (30).

3. The antenna assembly of claim 2 wherein the at least one antennas first and second (50, 52) are designed to operatively receive the data transmission from the electronic transmitting device (18) as the tire (58) passes over the convex upper surface (30) at the reduced rotational read rate or read rate range.

4. The antenna assembly of at least one of the previous claims wherein the convex upper surface (30) includes a leading inclined surface portion (34) for tire engagement tilted at an acute tilt angle (α) preferably in a range of from 9 to 19 degrees or from 13 to 15 degrees with respect to a horizontal ground plane.

5. The antenna assembly of at least one of the previous claims wherein the convex upper surface (30) and the at least one antennas first and second (50, 52) are attached to a common stand base member, the at least one antennas first and second (50, 52) being preferably mounted to the stand base member (22) below the upper convex surface (30).

6. The antenna assembly of at least one of the previous claims wherein the at least one antennas first and second (50, 52) are positioned adjacent to the convex upper surface (30) affixed to a stand base member.

7. The antenna assembly of at least one of the previous claims wherein the upper convex surface (30) has a leading end to a trailing end surface span sufficient to operatively require the tire (58) and the transmitting device (18) to substantially complete at least one revolution as the tire (58) passes over the upper convex surface span.

8. The antenna assembly of claim 7 wherein the transmitting device (18) is mounted to the vehicle tire assembly or the tire (58) and rotates with the tire (58), and wherein the leading end to trailing end surface span is sufficient to operatively require the tire (58) and the transmitting device (18) to substantially complete at least one revolution as the tire (58) passes over the upper convex surface span at the targeted reduced rotational read rate.

9. The antenna assembly of claim 1 wherein for the directionally aimed first antenna field (68) the acute tilt angle (α) is in a range of from 9 to 19 degrees, and wherein for the directionally aimed second antenna field (66) the acute tilt angle (α) is in a range of from 9 to 19 degrees.

10. The antenna assembly of claim 9 wherein for the directionally aimed first antenna field (68) the acute tilt angle (α) is in a range of from 13 to 15 degrees, and wherein for the directionally aimed second antenna field (66) the acute tilt angle (α) is in a range of from 13 to 15 degrees.

11. The antenna assembly of at least one of the previous claims wherein the antenna assembly is designed such that the first antenna field (68) and the second antenna field (66) are operatively positioned to place the electronic transmitting device (18) into a continuously coupled relationship with at least one of the first and second antenna fields as the tire (58) passes across the convex upper surface (30).

12. The antenna assembly of at least one of the previous claims wherein the at least one antennas first and second (50, 52) mounts to a stand base member below a lateral convex surface closely adjacent to the upper convex surface (30).

13. The antenna assembly of claim 12 wherein the lateral convex surface has a complementary concavity with the upper convex surface (30).

14. A method of reading a data transmission from an electronic transmitting device (18) mounted to a vehicle tire assembly, the method comprising:
positioning a convex upper surface (30) of a stand (22) to intercept a tire (58) of the vehicle tire assembly;
establishing rotational engagement between the tire (58) and the convex upper surface (30) to slow the speed of the vehicle and to reduce the rotational rate at which the tire rotates to a targeted reduced rotational read rate or a targeted reduced rotational read rate range;
directing first antenna field (68) from at least one first antenna (50) toward an approach path of the tire (58) to the convex upper surface (30) of the stand (22) to receive data transmission from the electronic transmitting device (18) as the tire passes over the convex upper surface (30) at the targeted reduced rotational read rate or the targeted reduced rotational read rate range;
**characterized in that** the method further comprises providing at at least one second antenna (52) proximally mounted with respect to the stand (22), the at least one second antenna (52) having a directionally aimed second antenna field (66) operative to receive the data transmission from the electronic transmitting device (18) as the tire (58) passes over the convex upper surface (30), wherein the directionally aimed first antenne field (68) is tilted at an acute tilt angle (α) toward an approach path of the tire (58) onto the convex upper surface (30) and the directionally aimed second antenna field (66) is tilted at an acute tilt angle (α) toward an exit path of the tire (58) along a trailing portion of the convex upper surface (30).

## Patentansprüche

1. Antennenanordnung zum Empfangen einer Datensendung von einer elektronischen Sendeeinrichtung (18), die an einem Fahrzeug (94) montiert ist, wobei das Fahrzeug (94) zumindest eine Fahrzeugreifenanordnung mit einem Reifen (58) aufweist, wobei die elektronische Sendeeinrichtung (18) an der Fahrzeugreifenanordnung montiert ist, wobei die Antennenanordnung (10) umfasst: einen Ständer (22) mit einer konvexen oberen Oberfläche (30), die dazu dient, den Reifen (58) abzufangen und mit diesem in Eingriff zu gelangen, wenn der Reifen (58) über den Ständer (22) läuft; und
zumindest eine erste Antenne (50), die nahe mit Bezug auf den Ständer (22) montiert ist, wobei die zumindest eine erste Antenne (50) ein gerichtetes erstes Antennenfeld (68) aufweist, das dazu dient, die Datensendung von der elektronischen Sendeeinrichtung (18) zu empfangen, wenn der Reifen (58) über die konvexe obere Oberfläche (30) läuft;
**dadurch gekennzeichnet, dass** die Antennenanordnung zumindest eine zweite Antenne (52) umfasst, die nahe mit Bezug auf den Ständer (22) montiert ist, wobei die zumindest eine zweite Antenne (52) ein gerichtetes zweites Antennenfeld (66) aufweist, das dazu dient, die Datensendung von der elektronischen Sendeeinrichtung (18) zu empfangen, wenn der Reifen (58) über die konvexe obere Oberfläche (30) läuft, wobei das gerichtete erste Antennenfeld (68) unter einem spitzen Neigungswinkel (α) in Richtung eines Annäherungswegs des Reifens (58) auf die konvexe obere Oberfläche (30) geneigt ist, und dass gerichtete zweite Oberfläche (30) geneigt ist, und dass gerichtete zweite Antennenfeld (66) unter einem spitzen Neigungswinkel (α) in Richtung eines Austrittswegs des Reifens (58) entlang eines auslaufseitigen Abschnitts der konvexen oberen Oberfläche (30) geneigt ist.

2. Antennenanordnung nach Anspruch 1,
wobei der Ständer (22) entworfen ist, um die Drehgeschwindigkeit des Reifens (58) im Betrieb auf eine gezielte reduzierte Lese-Drehgeschwindigkeit oder auf einen gezielten reduzierten Lese-Drehgeschwindigkeitsbereich herunter zu verlangsamen, wenn der Reifen (58) über die konvexe obere Oberfläche (30) läuft.

3. Antennenanordnung nach Anspruch 2,
wobei die zumindest eine erste und zweite Antenne (50, 52) entworfen sind, um die Datensendung von der elektronischen Sendeeinrichtung (18) im Betrieb zu empfangen, wenn der Reifen (58) mit der reduzierten Lese-Drehgeschwindigkeit oder dem reduzierten Lese-Drehgeschwindigkeitsbereich über die konvexe obere Oberfläche (30) läuft.

4. Antennenanordnung nach zumindest einem der vorhergehenden Ansprüche,
wobei die konvexe obere Oberfläche (30) einen einlaufseitigen geneigten Oberflächenabschnitt (34) für den Reifeneingriff umfasst,
der unter einem spitzen Neigungswinkel (α) vorzugsweise in einem Bereich von 9 bis 19 Grad oder von 13 bis 15 Grad mit Bezug auf eine horizontale Bodenebene geneigt ist.

5. Antennenanordnung nach zumindest einem der vorhergehenden Ansprüche,
wobei die konvexe obere Oberfläche (30) und die zumindest eine erste und zweite Antenne (50, 52) an einem gemeinsamen Ständerbasiselement angebracht sind, wobei die zumindest eine erste und zweite Antenne (50, 52) vorzugsweise an dem Ständerbasiselement (22) unterhalb der oberen konvexen Oberfläche (30) montiert sind.

6. Antennenanordnung nach zumindest einem der vorhergehenden Ansprüche,
wobei die zumindest eine erste und zweite Antenne (50, 52) benachbart zu der konvexen oberen Oberfläche (30) an einem Ständerbasiselement fixiert angeordnet sind.

7. Antennenanordnung nach zumindest einem der vorhergehenden Ansprüche,
wobei die obere konvexe Oberfläche (30) eine Oberflächenspanne von einem einlaufseitigen Ende zu einem auslaufseitigen Ende aufweist, die ausreicht, um im Betrieb zu erfordern, dass der Reifen (58) und die Sendeeinrichtung (18) zumindest eine Umdrehung im Wesentlichen abschließen, wenn der Reifen (58) über die obere konvexe Oberflächenspanne läuft.

8. Antennenanordnung nach Anspruch 7,
wobei die Sendeeinrichtung (18) an der Fahrzeugreifenanordnung oder dem Reifen (58) montiert ist und mit dem Reifen (58) rotiert, und wobei die Oberflächenspanne von dem einlaufseitigen Ende zu dem auslaufseitigen Ende ausreicht, um im Betrieb zu erfordern, dass der Reifen (58) und die Sendeeinrichtung (18) zumindest eine Umdrehung im Wesentlichen abschließen, wenn der Reifen (58) mit der gezielten reduzierten Lese-Drehgeschwindigkeit über die obere konvexe Oberflächenspanne läuft.

9. Antennenanordnung nach Anspruch 1,
wobei für das gerichtete erste Antennenfeld (68) der spitze Neigungswinkel (α) in einem Bereich von 9 bis 19 Grad liegt, und wobei für das gerichtete zweite Antennenfeld (66) der spitze Neigungswinkel (α) im Bereich von 9 bis 19 Grad liegt.

10. Antennenanordnung nach Anspruch 9,
wobei für das gerichtete erste Antennenfeld (68) der spitze Neigungswinkel (α) in einem Bereich von 13 bis 15 Grad liegt, und wobei für das gerichtete zweite Antennenfeld (66) der spitze Neigungswinkel (α) in einem Bereich von 13 bis 15 Grad liegt.

11. Antennenanordnung nach zumindest einem der vorhergehenden Ansprüche,
wobei die Antennenanordnung derart entworfen ist, dass das erste Antennenfeld (68) und das zweite Antennenfeld (66) funktional so positioniert sind, dass die elektronische Sendeeinrichtung (18) in einer kontinuierlich gekoppelten Beziehung mit zumindest einem der ersten und zweiten Antennenfelder steht, wenn der Reifen (58) über die konvexe obere Oberfläche (30) hinweg läuft.

12. Antennenanordnung nach zumindest einem der vorhergehenden Ansprüche,
wobei die zumindest eine erste und zweite Antenne (50, 52) an einem Ständerbasiselement unterhalb einer lateralen konvexen Oberfläche eng benachbart zu der oberen konvexen Oberfläche (30) montiert sind.

13. Antennenanordnung nach Anspruch 12,
wobei die laterale konvexe Oberfläche eine komplementäre Konkavität mit der oberen konvexen Oberfläche (30) aufweist.

14. Verfahren zum Lesen einer Datensendung von einer elektronischen Sendeeinrichtung (18), die an einer Fahrzeugreifenanordnung montiert ist, wobei das Verfahren umfasst, dass:
eine konvexe obere Oberfläche (30) eines Ständers (22) derart positioniert wird, dass sie einen Reifen (58) der Fahrzeugreifenanordnung abfängt;
ein rotatorischer Eingriff zwischen dem Reifen (58) und der konvexen oberen Oberfläche (30) hergestellt wird, um die Geschwindigkeit des Fahrzeugs zu verlangsamen und um die Drehgeschwindigkeit, mit der der Reifen rotiert, auf eine gezielte reduzierte Lese-Drehgeschwindigkeit oder einen gezielten reduzierten Lese-Drehgeschwindigkeitsbereich zu verringern;
ein erstes Antennenfeld (68) von zumindest einer ersten Antenne (50) in Richtung eines Annäherungsweges des Reifens (58) zu der konvexen oberen Oberfläche (30) des Ständers (22) gerichtet wird, um eine Datensendung von der elektronischen Sendeeinrichtung (18) zu empfangen, wenn der Reifen mit der gezielten reduzierten Lese-Drehgeschwindigkeit oder dem gezielten reduzierten Lese-Drehgeschwindigkeitsbereich über die konvexe obere Oberfläche (30) läuft;
**dadurch gekennzeichnet, dass** das Verfahren ferner umfasst, dass zumindest eine zweite Antenne (52) vorgesehen wird, die nahe mit Bezug auf den Ständer (22) montiert wird, wobei die zumindest eine zweite Antenne (52) ein gerichtetes zweites Antennenfeld (66) aufweist, das dazu dient, die Datensendung von der elektronischen Sendeeinrichtung (18) zu empfangen, wenn der Reifen (58) über die konvexe obere Oberfläche (30) läuft, wobei das gerichtete erste Antennenfeld (68) unter einem spitzen Neigungswinkel (α) in Richtung eines Annäherungswegs des Reifens (58) auf die konvexe obere Oberfläche (30) geneigt wird, und das gerichtete zweite Antennenfeld (66) unter einem spitzen Neigungswinkel (α) in Richtung eines Austrittswegs des Reifens (58) entlang eines auslaufseitigen Abschnitts der konvexen oberen Oberfläche (30) geneigt wird.

## Revendications

1. Assemblage d'antenne pour recevoir une transmission de données depuis un dispositif d'émission électronique (18) monté sur un véhicule (94), le véhicule 94 possédant au moins un assemblage de bandage pneumatique pour véhicule englobant un bandage pneumatique (58), le dispositif d'émission électronique (18) étant monté sur l'assemblage de bandage pneumatique pour véhicule, l'assemblage d'antenne (10) comprenant : un pied (22) possédant une surface supérieure convexe (30) opérationnelle pour intercepter et pour entrer en contact avec le bandage pneumatique (58) lorsque le bandage pneumatique (58) passe par-dessus le pied (22) ; et
au moins une première antenne (50) montée en position proximale par rapport au pied (22), ladite au moins une première antenne (50) possédant un premier champ d'antenne à orientation directionnelle (68) opérationnel pour recevoir la transmission de données depuis le dispositif d'émission électronique (18) lorsque le bandage pneumatique (58) passe par-dessus la surface supérieure convexe (30) ;
**caractérisé en ce que** l'assemblage d'antenne comprend au moins une deuxième antenne (52) montée en position proximale par rapport au pied (22), ladite au moins une deuxième antenne (52) possédant un deuxième champ d'antenne à orientation directionnelle (66) opérationnel pour recevoir la transmission de données depuis le dispositif d'émission électronique (18) lorsque le bandage pneumatique (58) passe par-dessus la surface supérieure convexe (30), dans lequel le premier champ d'antenne à orientation directionnelle (68) est soumis à une inclinaison en formant un angle d'inclinaison aigu (α) en direction de la voie d'approche du bandage pneumatique (58) sur la surface supérieure convexe (30) et le deuxième champ d'antenne à orientation directionnelle (66) est soumis à une inclinaison en formant un angle d'inclinaison aigu (α) en direction de la voie de sortie du bandage pneumatique (58) le long de la portion arrière de la surface supérieure convexe (30).

2. Assemblage d'antenne selon la revendication 1, dans lequel le pied (22) est conçu pour ralentir de manière opérante la vitesse de rotation du bandage pneumatique (58) jusqu'à une vitesse de lecture de rotation réduite ciblée ou jusqu'à une plage de vitesse de lecture de rotation réduite ciblée lorsque le bandage pneumatique (58) passe par-dessus la surface supérieure convexe (30).

3. Assemblage d'antenne selon la revendication 2, dans lequel lesdites au moins une première et deuxième antennes (50, 52) sont conçues pour recevoir de manière opérante la transmission de données depuis le dispositif d'émission électronique (18) lorsque le bandage pneumatique (58) passe par-dessus la surface supérieure convexe (30) à la vitesse de lecture de rotation réduite ou à la plage de vitesse de lecture de rotation réduite.

4. Assemblage d'antenne selon au moins une des revendications précédentes, dans lequel la surface supérieure convexe (30) englobe une portion de surface inclinée avant (34) pour la mise en contact avec le bandage pneumatique, qui s'incline en formant un angle d'inclinaison aigu (α), de préférence dans la plage de 9 à 19° ou de 13 à 15° par rapport au plan horizontal du sol.

5. Assemblage d'antenne selon au moins une des revendications précédentes, dans lequel la surface supérieure convexe (30) et lesdites au moins une première et deuxième antennes (50, 52) sont fixées à un membre de base commun faisant office de pied, et lesdites au moins une première et deuxième antennes (50, 52) étant montées de préférence sur le membre de base (22) en forme de pied en dessous de la surface convexe supérieure (30).

6. Assemblage d'antenne selon au moins une des revendications précédentes, dans lequel lesdites au moins une première et deuxième antennes (50, 52) sont disposées en position adjacente à la surface supérieure convexe (30).

7. Assemblage d'antenne selon au moins une des revendications précédentes, dans lequel la surface convexe supérieure (30) possède une étendue de surface entre l'extrémité avant et l'extrémité arrière suffisante pour nécessiter de manière opérante le fait que le bandage pneumatique (38) et le dispositif d'émission (18) effectue essentiellement au moins une révolution lorsque le bandage pneumatique (58) passe par-dessus l'étendue de surface convexe supérieure.

8. Assemblage d'antenne selon la revendication 7, dans lequel le dispositif d'émission (18) est monté sur l'assemblage de bandage pneumatique du véhicule ou sur le bandage pneumatique (58) et tourne avec le bandage pneumatique (58), et dans lequel l'étendue de surface entre l'extrémité avant et l'extrémité arrière est suffisante pour nécessiter de manière opérante le fait que le bandage pneumatique (38) et le dispositif d'émission (18) effectue essentiellement au moins une révolution lorsque le bandage pneumatique (58) passe par-dessus l'étendue de surface convexe supérieure à la vitesse de lecture de rotation réduite ciblée.

9. Assemblage d'antenne selon la revendication 1, dans lequel, pour le premier champ d'antenne à orientation directionnelle (68), l'angle d'inclinaison aigu (α) se situe dans la plage de 9 à 19°, et dans lequel, pour le deuxième champ d'antenne à orientation directionnelle (66), l'angle d'inclinaison aigu (α) se situe dans la plage de 9 à 19°.

10. Assemblage d'antenne selon la revendication 9, dans lequel, pour le premier champ d'antenne à orientation directionnelle (68), l'angle d'inclinaison aigu (α) se situe dans la plage de 13 à 15°, et dans lequel, pour le deuxième champ d'antenne à orientation directionnelle (66), l'angle d'inclinaison aigu (α) se situe dans la plage de 13 à 15°.

11. Assemblage d'antenne selon au moins une des revendications précédentes, dans lequel l'assemblage d'antenne est conçu de telle sorte que le premier champ d'antenne (68) et le deuxième champ d'antenne (66) sont disposés de manière opérante pour placer le dispositif d'émission électronique (18) dans une relation de couplage en continu avec au moins un des premier et deuxième champs d'antennes, lorsque le bandage pneumatique (58) traverse la surface supérieure convexe (30).

12. Assemblage d'antenne selon au moins une des revendications précédentes, dans lequel lesdites au moins une première et deuxième antennes (50, 52) sont montées sur un membre de base faisant office de pied en dessous d'une surface convexe latérale étroitement adjacente à la surface convexe supérieure (30).

13. Assemblage d'antenne selon la revendication 12, dans lequel, la surface convexe latérale possède une concavité complémentaire avec la surface convexe supérieure (30).

14. Procédé de lecture d'une transmission de données à partir d'un dispositif d'émission électronique (18) monté sur un assemblage de bandage pneumatique pour véhicule, le procédé comprenant le fait de :
positionner une surface supérieure convexe (30) d'un pied (22) pour intercepter un bandage pneumatique (58) de l'assemblage de bandage pneumatique pour véhicule ;
établir un contact rotatif entre le bandage pneumatique (58) et la surface supérieure convexe (30) pour réduire la vitesse du véhicule et pour réduire la vitesse de rotation à laquelle tourne le bandage pneumatique jusqu'à une vitesse de lecture de rotation réduite ciblée ou jusqu'à une plage de vitesse de lecture de rotation réduite ciblée ;
diriger le premier champ d'antenne (68) depuis au moins une première antenne (50) vers une voie d'approche du bandage pneumatique (58) par rapport à la surface supérieure convexe (30) du pied (22) pour recevoir une transmission de données depuis le dispositif d'émission électronique (18) lorsque le bandage pneumatique passe par-dessus la surface supérieure convexe (30) à la vitesse de lecture de rotation réduite ciblée ou dans la plage de vitesse de lecture de rotation réduite ciblée ;
**caractérisé en ce que** le procédé comprend en outre le fait de procurer au moins une deuxième antenne (52) montée en position proximale par rapport au pied (22), ladite au moins une deuxième antenne (52) possédant un deuxième champ d'antenne (66) à orientation directionnelle, opérationnel pour recevoir la transmission de données depuis le dispositif d'émission électronique (18) lorsque le bandage pneumatique (58) passe par-dessus la surface supérieure convexe (30), dans lequel le premier champ d'antenne à orientation directionnelle (68) est soumis à une inclinaison en formant un angle d'inclinaison aigu (α) en direction de la voie d'approche du bandage pneumatique (58) sur la surface supérieure convexe (30) et le deuxième champ d'antenne à orientation directionnelle (66) est soumis à une inclinaison en formant un angle d'inclinaison aigu (α) en direction de la voie de sortie du bandage pneumatique (58) le long de la portion arrière de la surface supérieure convexe (30).
